# EUROPEAN PATENT SPECIFICATION

(11) **EP 3 767 985 B1**
(45) Date of publication and mention of the grant of the patent: **07.12.2022**
(21) Application number: 19187051.8
(22) Date of filing: 18.07.2019
(51) Int. Cl.: H04W 12/06, G06F 21/34, H04W 4/80, G06F 21/35, H04W 12/08, G06F 21/62, G06F 21/31, G07C 9/00, H04W 4/06, H04W 28/06

(54) **ACCESS CONTROL METHOD USING BROADCASTED DATA**
ZUGRIFFSSTEUERUNGSVERFAHREN UNTER VERWENDUNG VON ÜBERTRAGENEN DATEN
PROCÉDÉ DE CONTRÔLE D'ACCÈS UTILISANT DES DONNÉES DIFFUSÉES

(43) Date of publication of application: 20.01.2021
(73) Proprietor: neXenio GmbH, 10117 Berlin (DE)
(72) Inventor: Schultz, Stephan, 14471 Berlin (DE); Berger, Philipp, 10627 Berlin (DE); Hennig, Patrick, 10437 Berlin (DE); Fladischer, Harald, 13159 Berlin (DE)
(74) Representative: Richardt Patentanwälte PartG mbB

(56) References cited:
- US-A1- 2014 378 057
- US-A1- 2016 066 212
- US-A1- 2016 100 311
- US-A1- 2017 061 410
- US-A1- 2018 144 563
- US-A1- 2019 020 636
- US-B1- 9 483 887

## Description

### TECHNICAL FIELD

The disclosure relates to wireless systems, and particularly to an access control method.

### BACKGROUND

The use of mobile communication devices has been dramatically increasing in recent years. In particular, mobile devices have become ruggedized for use in many fields. Uses include digitizing notes, sending and receiving invoices, asset management, recording signatures, managing parts, and scanning bar codes. However, as the use of mobile devices increases, there is a continuous need to develop more convenient additional functions to satisfy technical needs of the different uses.

US 9483887 B1 discloses a hands-free access control to a secured area by an access control device.

US 2018/144563 A1 discloses an access gate that controls access to a restricted area using long range wireless beacons and short long range beacons.

US 2017/061410 discloses a method and system for access control to secure facilities using access points and a centralized server.

US 2014/378057A1 discloses a low energy Bluetooth system with authentication during connectionless advertising and broadcasting.

US 2016/066212 A1 discloses a system and method for broadcasting encoded beacon signals.

### SUMMARY

It is an objective of embodiments of the invention to provide for an access control method, a library, and a communication device. Said objective is solved by the subject matter of the independent claims. Advantageous embodiments are described in the dependent claims.

In one aspect, the invention relates to an access control method comprising intercepting by a computer system one or more data packets of at least one data item of a broadcaster over a connectionless channel in a short-range radio-frequency band; using the data item for authenticating the broadcaster; and in case the broadcaster is authenticated, enabling the broadcaster to access a service enabled by the computer system.

In another aspect, the invention relates to an access method comprising: intercepting by a computer system one or more data packets of at least one data item of a broadcaster over a connectionless channel in a short-range radio-frequency band; using the data item for identifying and/or authenticating the broadcaster; and in case the broadcaster is identified and/or authenticated, enabling the broadcaster to access a service enabled by the computer system.

The computer system may receive the one or more data packets of the at least one data item, wherein the one or more data packets of the at least one data item are broadcasted by the broadcaster. The data item broadcasted by the broadcaster enables authentication and/or identification of the broadcaster. If, for example, the received data item does not allow to authenticate the broadcaster, the broadcaster may not be enabled to access the service enabled by the computer system. For example, the broadcaster and the computer system may each be configured to perform packetization (or fragmentation) and reassembly of data items. The computer system may be configured to reassemble data packets of a given data item that has been fragmented or packetized into data packets by the broadcaster.

In one example, the broadcaster and the computer system may be Bluetooth-enabled devices.

The computer system may, for example, be configured to perform a passive scan by listening for advertising packets, wherein the broadcaster is not aware that packets of the data item are received at the computer system. By listening, the computer system may receive or intercept the one or more data packets over the connectionless channel. The data packets may, for example, be link layer packets of a link layer of the broadcaster. The link layer of the computer system may reassemble the packets of a data item in accordance with the present subject matter. For example, when fragmentation is used, larger data items are split into multiple link layer packets and reassembled by the link layer of the computer system.

Authenticating the broadcaster comprises, for example, determining whether a user of the broadcaster is authorized to access the service enabled by the computer system. For example, authenticating the broadcaster may comprise determining by the computer system that a value that is comprised in the data item is associated with identity information and authentication information e.g. in a record database of the computer system. For example, the broadcaster may be authenticated if the received value is associated with a name of the owner of the broadcaster and information indicating that a user with said name is authorized to access the service. For example, if the broadcaster is a smartphone, the user may be the owner of the smartphone who may be holding the smartphone when the broadcaster broadcasted the data packets. The authentication may, for example, comprise checking whether an ID or other information contained in the data item is associated with an authorized user or device and/or whether that information is valid information. For example, if the data item is a flight number, the authentication may comprise determining whether the flight number is a valid one and whether the secured area is an area that can access a person who is planning to travel with that flight number. In this case, that person may be someone who is authorized to access the secured area if he or she has the right valid flight number. Enabling the broadcaster to access the service comprises, for example, enabling the user of the broadcaster to access the service.

Identifying the broadcaster comprises, for example, obtaining identity information, from an existing record database, that is associated with a received data item. The identity information may, for example, comprise personal identity information such as a social security number and/or role information indicating the role or function of the user/owner of the broadcaster. For example, the received data item may comprise an identifier of the user/owner of the broadcaster. The computer system may search the record database for an entry that corresponds to the received identifier in order to identify the broadcaster. That entry may comprise, for example, identity information of the owner. The computer system may use a same or different record database for performing the identification and the authentication.

The service may, for example, be enabled by the computer system by executing one or more instructions by the computer system. The one or more instructions may be referred to as service instructions, as they may be associated with the enabled service. In one example, the execution of the service instructions is conditional on the authentication and/or identification of the broadcaster in accordance with the present method e.g. only if the broadcaster is authenticated the service instructions are executed by the computer system. In one example, the method may enable more than one service. In this case, each service of the more than one service may be associated with respective service instructions, and in response to authenticating the broadcaster, the more than one service may be enabled by executing respective service instructions. For example, if the service is the access to an area in an airport or in a manufacturing site, enabling the service comprises opening a door or other means that enables the user of the broadcaster to enter the area.

The present method may enable efficient access to data through communication as described herein (e.g., the computer system just needs to be within the range of communication of the broadcaster). The present method may advantageously be used in different fields, such as physical security and information security. The access control may enable a selective restriction of access to a place or other resources. The act of accessing may comprise consuming, entering, or using. The present method may enable an automatic and secure control of access to services by limiting access to authenticated or authorized users.

This may enable a process by which users are granted access and certain privileges to systems, resources, or information. The present method may enable access to services without requiring direct links, such as optical links between the computer system and the broadcaster.

According to one embodiment, the computer system is a door lock system of a hotel, wherein the enabling access comprises enabling access to the hotel in case the broadcaster is both identified and authenticated.

According to one embodiment, the computer system is a door lock system of a hotel room, wherein the enabling access comprises enabling access to the hotel room in case the broadcaster is identified. Since a guest has already been authenticated for entering the hotel, there is no need to authenticate him or her again. This may save processing resources that would otherwise be required by an authentication process.

A guest is usually required to stop at a front desk of a hotel to check in and be given a room access key in order to be able to access the room. However, the check in process may take long time and for the guest, carrying around a key is a burden and furthermore the key can be lost. With the present embodiment, the guest may not need to stop at any desk or request keys at the desk as he or she may be let automatically enter the hotel and the room assigned to him or her. For example, upon reserving a hotel room, the user may receive a reservation number and a room number, wherein the broadcasted data item comprises the reservation number. The booking may, for example, be performed using a hotel app that is installed in the broadcaster. The hotel app is configured to invoke or call a system app that is configured to broadcast data in accordance with the present subject matter. The system app may, for example, be invoked by receiving the reservation number from the hotel app. Upon receiving the reservation number, the door lock system of the hotel may automatically open the hotel door so that the guest can enter the hotel. The guest may use the received room number to find the hotel room.

Upon receiving the reservation number, the door lock system of the hotel room may automatically open the room door so that the guest can enter the hotel room.

According to one embodiment, the computer system is a door lock system of an autonomous bus, wherein the enabling access comprises enabling access to the bus in case the broadcaster is both identified and authenticated. The enabling access comprises opening an entrance door of the autonomous bus.

For example, upon buying a ticket, a passenger may receive a ticket number. The passenger may for example request the ticket using a bus booking app. The bus booking app is configured to invoke the system app using the ticket number. The system app may be invoked by receiving the ticket number from the bus booking app. Upon receiving the ticket number, the door lock system of the autonomous bus may automatically open the entrance door so that the passenger can enter the autonomous bus.

According to one embodiment, the computer system is a restaurant, point of sale (POS) system, wherein the enabling access comprises enabling access to order information associated with the broadcaster in case the broadcaster is identified. The restaurant POS system enables multiple waiters to process orders they have served. Using the present method, the broadcaster of a waiter may broadcast an identifier of the waiter. Upon receiving the identifier of a waiter the restaurant POS system may display the orders of the waiter.

According to one embodiment, the computer system is an airport luggage system, wherein enabling the access to a service enabled by the airport luggage system comprises labeling a luggage of a user, transporting and sorting the luggage in case the broadcaster is identified and authenticated. This may enable an automatic checking at the airport.

For example, upon receiving a flight number and the user has placed the luggage on a luggage pick-up track of the airport luggage system, the airport luggage system may automatically label the luggage and transport the luggage using the luggage pick-up track.

According to one embodiment, the computer system is an automatic parking system, wherein enabling the access to a service enabled by the automatic parking system comprises opening a pivoted gate. For example, the driver of a car may receive a parking number that enables him/her to park in a parking. The broadcasted data item comprises the parking number. Upon receiving the parking number, e.g. while the car is in front of the gate, automatic parking system may open the pivoted gate in case the broadcaster is authenticated. This may enable the driver to park in the parking.

According to one embodiment, the computer system is comprised in an access control system, wherein the enabling access comprises enabling access to a secured area in case the broadcaster is authenticated.

In one example, the computer system may enable access to the service by controlling an electric gate of the access control system to open so that the user of the broadcaster may enter the secured area. The computer system may, for example, be configured to produce signals for controlling the operation of an electric gate of the access control system. The electric gate comprises an electric gate motor that enables it to open and close without anyone having to manually push the gate. The computer system may be configured to operate in accordance with this embodiment by using the data item for authenticating the broadcaster and, if the broadcaster is authenticated, enabling the broadcaster to access a service enabled by the computer system by sending a control signal to the electric gate motor to open the electric gate. The electric gate may, for example, be a sliding door. This embodiment may enable a security measure that denies unauthorized access to the secured area.

In one example, the computer system may control multiple electric gates of the access control system based on the authentication of the broadcaster; e.g., if the broadcaster is authenticated, the multiple electrical gates may be controlled to open to enable access to different secured areas associated with the multiple electrical gates. This may be particularly advantageous if the different secured areas are accessible one after the other e.g. the user has to enter one room before he or she can enter the next room. This may enable a centralized approach for controlling electric gates.

In another example, the computer system may enable access to the secured area by controlling the access control system to release locking means, such as locking means of a door. By releasing the locking means, the user of the broadcaster can access the secured area e.g. by opening the door.

In another example, the computer system may enable access to the secured area by controlling the access control system to output a signal such as an audio signal indicating that the user of the broadcaster is authorized to access the secured area. The user may then be allowed to access the secured area when the signal is output.

According to one embodiment, the computer system is an electronic control panel of a production system, wherein the enabling access comprises displaying control information in the electronic control panel and controlling the production system in accordance with a selection of the displayed information and/or with an input received at the electronic control panel based on the displayed information. For example, the computer system may comprise a display device such as a touch screen. In response to authenticating the broadcaster, the computer system may display a graphical user interface (GUI) on the display device. The GUI may comprise only information or data that the user of the broadcaster can use. The user may use the displayed information, for example, to control a manufacturing process that is enabled by the production system. The manufacturing process may involve assembly lines, robotic devices, or any activity that may require high- reliability control. For example, the displayed information may comprise buttons or input fields that the user can use to input data or trigger an action that would control the manufacturing process. For example, the electronic control panel may be used to control a production process by controlling operations (e.g., setting up) of one or more machines and processes of a production line. This embodiment may, for example, enable a secure remote production line control.

For example, the electronic control panel may comprise a display where control or monitoring instruments may be displayed, such as the electronic control panel of a security system. Depending on the authenticated broadcaster, the electronic control panel may display only information that can be used to monitor and control specific machines or production lines of the production system. For example, if the authenticated broadcaster is associated with a highest predefined privilege, the electronic control panel may display all information necessary or needed for machines or production lines of the production system. In another example, if the authenticated broadcaster is associated with a lower predefined privilege, the electronic control panel may display information necessary or needed for controlling only a part of the machines or production lines of the production system. For example, the electronic control panel may store a mapping between predefined privileges and information to be displayed for that predefined privilege.

In another example, the displayed control information may provide indications or guidance to the user of the broadcaster to access a given production area of the production system.

This embodiment may enable an improved working environment by enabling automated, safe control of the production system. This embodiment may further improve safety within a production process or plant and increase production capacity of the production system. In particular, the automated control via the electronic control panel may increase production capacity as machines can be set to work 24/7 unmanned. Also, automated machinery can typically run faster and produce more accurately made products with fewer defects.

According to one embodiment, the enabling access comprises enabling execution of one or more software applications in case the broadcaster is authenticated and/or enabling access to stored information of the computer system in case the broadcaster is identified. For example, the stored information may be information that is associated with the broadcaster which is not secret or can be seen by others e.g. in the POS system a waiter can see the orders of another waiter. This embodiment may enable information security by preventing unauthorized access, use, disclosure, disruption, modification, inspection, recording, or destruction of the stored information and/or software applications. For example, the computer system may be a desktop computer that enables access to software applications depending on whether the user is authenticated. The user does not have to enter a password or login information because the user's broadcaster broadcasts data items that can be used for authentication. This may enable automatic and efficient control of and access to data/applications of the computer system.

According to one embodiment, the method further comprises repeating the authentication and/or identification step, and in case the broadcaster is further authenticated and/or identified continuing the enabling of the access; otherwise preventing the access to the broadcaster. This may enable a continuous access control to computer resources, which may further increase the secure aspect of the present subject matter. For example, if the user has left the computer, the user does not have to switch off the computer, as it will automatically disable access to applications/data once the computer system stops receiving the data item of authentication from the broadcaster.

According to one embodiment, each data packet of the data packets comprises a sequence number indicative of a transmission order of the data packet within a sequence of the data packets forming the data item, and an index indicative of the data item, the method further comprising using the sequence number and the index for combining the intercepted data packets that form a single data item of the at least one data item. The method may be used to combine or reassemble each group of data packets that form a respective data item. The index may indicate an identifier of the data item that distinguishes it from other data items and may further indicate the number of packets in the data item.

According to one embodiment, a data item of the at least one data item is a session key, wherein the data packets of one or more other data items of the at least one data item are encrypted by the session key. The received data packets are encrypted by the broadcaster. The session key may be received as part of the computer system and the broadcaster's executing the steps of a key-exchange protocol, wherein the execution comprises the reception of the session key. This may enable a consistent and secure exchange of data in that the session key is transmitted in the same way the user data is transmitted.

In the following embodiments, the broadcaster uses the session key to decrypt further received data packets that have been encrypted by the broadcaster. The data item comprising the session key is broadcast by the broadcaster, as described herein, by performing packetization of the session key. The computer system may reassemble the session key, e.g., using the count number and the index of data packets of the session key.

According to one embodiment, the method further comprises splitting the session key into a predefined number of key portions (e.g., N key portions, where N = 4, 5, etc.), repeatedly selecting a different key portion of the key portions, and using the selected key portion for decrypting the encrypted data packet until the encrypted data packet is decrypted. The splitting of the session key by the computer system may use a same splitting method as used by the broadcaster (as described herein) to split the session key. The splitting method may, for example, indicate the number of key portions and their sizes, etc. This may be advantageous in case the data packets of the received session key do not correspond to the key portions that resulted from the splitting of the session key by the broadcaster; in other words, the broadcaster's splitting of the session key is independent of the packetization of the session key.

According to one embodiment, the method further comprises splitting the session key into a predefined number of key portions; and for each received data packet of the data packets: determining if the received data packet is the first received data packet of the further data item; if the received data packet is the first received data packet of the data item, repeatedly selecting a different key portion of the key portions, and using the selected key portion for decrypting the encrypted data packet, until the encrypted data packet is decrypted with a given key portion; if the received data packet is not the first received data packet of the data item, using the given key portion for decrypting the received data packet; and if it is not decrypted repeatedly selecting a different key portion of the key portions, and using the selected key portion for decrypting the encrypted data packet, until the encrypted data packet is decrypted.

According to one embodiment, the method further comprises splitting the session key into a predefined number of key portions; and for each receive data packet of the data packets: determining if the received data packet is the first received data packet of the data item; if the received data packet is the first received data packet of the further data item, repeatedly selecting a different key portion of the key portions, and using the selected key portion for decrypting the encrypted data packet, until the encrypted data packet is decrypted with a given key portion; if the received data packet is not the first received data packet of the further data item, using the selection scheme for finding one or more key portions that can be used to decrypt the encrypted data packet, and decrypting the encrypted data packet with one of the found key portions.

According to one embodiment, the key portions form a sequence of key portions, wherein the key selection scheme comprises selecting the key portions in a predefined order. For example, the key portions may be numbered, e.g., according to their position in the session key, and the selection scheme may require that the key portions are used following the ascending order of the numbers. That is, the first portion would be selected first, followed by the second key portion, followed by the third key portion, and so on. In another example, any predefined order (e.g., user-defined order) of key portion selection can be used. For example, the selection scheme may indicate that the third key portion is first selected, followed by the seventh key portion, followed by the second key portion, and so on.

According to one embodiment, the method further comprises receiving data packets of an authentication data item. The authentication data item comprises a behavioral authentication level value, this value indicating an authentication level of a user of the broadcaster, wherein the enabling of the broadcaster to access the service enabled by the computer system is performed only if the behavioral authentication level value fulfills a predefined behavioral authentication condition. The behavioral authentication condition may, for example, require that the behavioral authentication level value is higher than a predefined threshold. The authentication level refers to the degree of verification that the broadcaster may employ to authenticate the user. The degree of verification may, for example, be quantified by the number of verifications performed to authenticate the user and that resulted in authentication of the user.

In one aspect, the invention relates to a communication method for transmitting at least one data item. The method comprises packetizing, by a communication device, the data item into a sequence of data packets and broadcasting by the communication device the data packets over a connectionless channel in a short-range radio-frequency band.

The data item is a user's data item. For example, a user application (e.g., a user mobile application) has produced or provided the data item to the communication device. The communication method comprises receiving a request for transmitting the data item in a connection-oriented channel and performing the packetizing and the broadcasting in response to receiving that request. The request may be received from an application of the communication device itself or from a remote application. The request received from the remote application may be received in a connection-oriented channel. This may enable a seamless integration of the present method with existing applications, e.g., using Bluetooth.

The broadcasting may enable access to the data item by all devices that are in an area of the broadcast that is defined by the transmission range of the communication device. The present method may not require pre-knowledge of the receivers of the data item in order to broadcast the data item. The broadcasting in accordance with the present subject matter may be advantageous compared with other services, as the broadcasts are meant for unknown or temporary recipients. One example is mobile devices of visitors to a location. In this case, the mobile devices do not need to be known beforehand by the communication device in order to be able to access the data item, as they just need to be within the range of communication of the communication device. Thus, the present subject matter may be able to serve a high number of devices and may not be limited to a small, fixed number of devices to which the data can be communicated.

For example, the communication device may be a mobile Bluetooth-enabled device. This may be advantageous because, in contrast to known mobile devices, the communication device of the present subject matter may be configured to communicate via Bluetooth with multiple devices at the same time. For example, a conventional Bluetooth-enabled device can work with only a few devices at the same time since Bluetooth allows up to seven connections to one Bluetooth radio at the same time. The fact that it supports only seven connections is a limitation that may be overcome by the present subject matter. The present communication device may solve this problem since there may be no requirement on setting up a connection to the communication device. This may further have the advantage of saving the time required for setting up connections (e.g., handshakes).

In one example, the data item is received from the communication device by each device of a number N of devices, wherein N > 7.

The present method may further not be limited in the size of data to be transmitted. For example, the at least one data item may have a size that is higher than a predefined minimum size e.g.100 kb.

Examples of a communication device include but are not limited to cellular telephone, smartphone, smartwatch, personal digital assistant (PDA), handheld device, wireless modem, laptop computer, personal computer, machine-type communication (MTC) device, machine-to-machine (M2M) device, and sensor device (including, for example, so-called smart meters, alarms, and health monitoring devices).

According to one embodiment, the method further comprises repeatedly: determining an urgency level of transmission of the at least one data item that are currently stored at the communication device; assigning to each data packet of the data packets a timestamp being indicative of a delay for broadcasting the respective data packet; and executing a priority scheduling using the determined urgency level and the current time delays, thereby calculating priorities of the data packets, wherein the broadcasting of at least part of the data packets is performed in accordance with the priorities. This may enable that in each iteration/repetition: before performing the broadcasting, the priority scheduling is re-executed for the currently stored packets and the broadcasting is performed in accordance with new results of the re-execution of the priority scheduling. This embodiment may enable a controlled and efficient communication of data by the communication device.

According to one embodiment, the transmission is performed using at least one advertiser of the communication device, wherein the advertiser is configured to transmit a scheduled data packet in accordance with an advertisement time frame, wherein the repetition is performed with a repetition frequency proportional to the advertisement time frame.

The repetition of the determination of the urgency level, the assigning of the time stamp, and the executing of the priority scheduling is performed based on the advertisement time frame (ATF) of the advertiser. For example, the repetition may be performed every ATF e.g. after initiating an iteration, the next iteration would start after a time period of ATF.

The at least one advertiser may comprise predefined advertisers. Each advertiser may be associated with its values of broadcasting parameters of the communication device. The advertiser may control the communication device to broadcast the data packets in accordance with its broadcasting parameters. For example, the advertiser may control the communication device to advertise or broadcast on one given channel every 100ms or 200ms.

According to one embodiment, the method further comprises determining advertisers of the communication device, wherein each advertiser of the advertisers is configured to transmit a data packet in accordance with an assigned advertisement time frame; for each data item of the at least one data item, selecting an advertiser of the advertisers using the urgency level of the data item and the advertisement time frames; for each advertiser of the selected advertisers, separately performing the execution of the priority scheme using the urgency level and the current time delays of data packets for which said advertiser is selected, wherein said advertiser is configured to perform the broadcasting of said data packets. This embodiment may optimize data transmission based on user needs; e.g., the fastest transmission is to be selected for the highest urgency level.

According to one embodiment, the method further comprises receiving the data items from a real-time data source and/or from a static data source, wherein the urgency level of a data item received from the real-time data source is higher than the urgency level of a data item received from the static data source.

For example, two urgency levels may be defined. The communication method comprises: upon receiving the data item, automatically determining whether the source of the data item is a real-time application or not, and if it is, assigning the highest urgency level of the two urgency levels to the data item; otherwise, assigning the lowest urgency level of the two urgency levels to the data item. This may enable an automatic and efficient transmission of data. For example, if the user of the real-time application does not see any transmission of data, he or she may try again to resubmit the data item. This may be prevented by the present embodiment.

According to one embodiment, the real time data source comprises one of a: location determining system, real time flight data source, and news data source; the static data source providing a user identity. This embodiment may be advantageous, as the transmission priorities may enable access to the right information at the right time. For example, the access to user identities is less urgent than the access to flight information.

According to one embodiment, each data packet of the data packets comprises a sequence number indicative of a transmission order of the data packet within the sequence and an index indicative of the data item, the method further comprising repeating the broadcasting of the sequence of data packets at least once. The index may enable distinguishing between packets of different data items. The transmission order may enable combining or assembling the data packets that form a given data item. Repeating the submission of the data item may enable a receiver to receive the data item multiple times and thus may enable the receiver to perform a time-dependent processing of the same data item; e.g., if the data item is used for authentication, the authentication process may be repeated for each further received data item.

According to one embodiment, the broadcasting comprises, for each data packet of the data item, randomly hopping from a previously used frequency to another frequency of the short-range radio-frequency band for the broadcasting of the data packet or, for each iteration of the broadcasting of the sequence of data packets, randomly hopping from a previously used frequency to another frequency of the short-range radio-frequency band for the iterated broadcasting of the data packets.

According to one embodiment, the method further comprises initializing a count value, wherein the broadcasting of the data packets comprises changing the count value with a predefined amount for each of the data packets, including the count value into the data packet and broadcasting the resulting data packet, reinitializing the count value upon transmitting a predefined number of sequences.

According to one embodiment, the method further comprises executing by the communication device steps of a key-exchange protocol, wherein the execution comprises the transmission of the data item.

The key-exchange protocol may, for example, be defined as follows. For example, another communication device is configured to transmit data using the communication method. The communication device may thus receive from the other communication device broadcasted data packets of a second public key. The communication device may generate a session key and may encrypt the session key using the second public key. The communication device may sign with a first private key the encrypted session key and may transmit the session key using the communication method.

According to one embodiment, the method further comprises receiving by another communication device a data packet of the sequence; determining, using the count value of the data packet, a time gap between the reception of the data packet and another received data packet of the sequence; if the time gap is longer than a predefined threshold generating a signal indicating a suspected replay attack. This embodiment may enable a secure transmission of data.

According to one embodiment, the method further comprises splitting (e.g., using the splitting method) by the communication device a session key of the key-exchange protocol into a predefined number of key portions; packetizing, by the communication device, a further data item into a sequence of data packets; for each data packet of the further data item, selecting a key portion of the key portions in accordance with a key selection scheme, and encrypting the data packet with the selected key portion; and broadcasting by the communication device the encrypted data packets of the further data item over a connectionless channel in a short-range radio-frequency band. This embodiment may further increase the secure aspect of the present subject matter.

In another example, each of the data packets may be encrypted by the whole session key. The receiver of the data packets may use the session key that is exchanged in accordance with the key-exchange protocol to decrypt the encrypted data packets. For example, the receiver and the communication device may comprise a mapping between indexes and session keys. For each data item to be transmitted, the communication device may select the pair of index and session key of the mapping and use that pair to create the header containing the index of the pair and also to encrypt the data packets of the data item using the session key of the pair. The receiver, upon receiving a data packet, may read the header of the data packet to find the index of the data item and, by using the mapping, may identify the corresponding session key. This may enable a secure and optimal communication of data between the devices. The mapping may, for example, be pre-stored or provided (e.g., in the form of a table) in the communication device and the receiver.

According to one embodiment, the method further comprises receiving by another communication device an encrypted data packet of the encrypted data packets, repeatedly selecting a different key portion of the key portions, and using the selected key portion for decrypting the encrypted data packet until the encrypted data packet is decrypted.

According to one embodiment, the method further comprises determining by the other communication device if the received data packet is the first received data packet of the further data item; if the received data packet is the first received data packet of the further data item, repeatedly selecting by the other communication device a different key portion of the key portions, and using the selected key portion for decrypting the encrypted data packet, until the encrypted data packet is decrypted with a given key portion; if the received data packet is not the first received data packet of the further data item, using by the other communication device the given key portion for decrypting the received data packet; and if it is not decrypted repeatedly selecting a different key portion of the key portions, and using the selected key portion for decrypting the encrypted data packet, until the encrypted data packet is decrypted.

According to one embodiment, the method further comprises determining by the other communication device if the received data packet is the first received data packet of the further data item; if the received data packet is the first received data packet of the further data item, repeatedly selecting a different key portion of the key portions, and using the selected key portion for decrypting the encrypted data packet, until the encrypted data packet is decrypted with a given key portion; if the received data packet is not the first received data packet of the further data item, using the selection scheme for finding one or more key portions that can be used to decrypt the encrypted data packet, and decrypting the encrypted data packet with one of the found key portions.

According to one embodiment, the key portions form a sequence of key portions, wherein the key selection scheme comprises selecting the key portions in a predefined order.

According to one embodiment, the count value is encrypted using a session key of the key-exchange protocol.

According to one embodiment, the communication device is a portable communication device of a user (individual). The method further comprises performing a behavioral authentication step for authenticating the user and performing the transmission of the data item if the user is authenticated. That is, before performing the packetizing and the broadcasting, the user may be authenticated, and the packetizing and the broadcasting may be performed only if the user is authenticated. This may enable a secure communication of data.

In one example, the method further comprises performing one or more times a behavioral authentication step for authenticating the user as part of the broadcasting step, and performing the broadcasting of the data item if the user is authenticated in one of the behavioral authentication steps. That is, the packetizing may be performed regardless of whether the user is authenticated or not. This may be advantageous in case the user is authenticated in a later authentication step, as the resources needed to repeat the packetizing may be saved. The repeated authentication may be advantageous, as the user may be in a special situation that has not been covered by the reference data, and thus by repeating the behavioral authentication step, the user may switch to a normal situation. The performing of one or more times a behavioral authentication step may comprise repeating the behavioral authentication step on a predefined period basis, e.g., every 10 minutes.

The behavioral authentication step comprises continuously monitoring and scoring or evaluating, in real time, the way the user of the communication device interacts with the communication device - via touch gesture behavior user movements, etc. In another example, the behavioral authentication step comprises providing at least one sensor of the communication device; measuring data indicative of a behavior (e.g., a movement) of the user of the communication device by the at least one sensor; inputting the measured data into a classification module of the communication device; generating a classification result by the classification module as to whether the user of the communication device is a user of the communication device; and generating an authentication signal indicating a successful authentication of the user based on the classification result. The classification module may, for example, be configured to compare the measured data with predefined reference data, and based on the comparison result, the classification module may determine whether the user of the communication device is authenticated or not. The measured data may, for example, comprise values of one or more behavior parameters. The comparison may be performed between the measured behavior parameter values with respective reference behavior parameter values. The behavior parameters may, for example, indicate software usage behavior information such as the name of software used by the user, the memory usage of the software, etc. The behavior parameters may further indicate a movement speed, movement frequency, and/or movement pattern, etc., of the user.

In one example, the behavioral authentication step results in an authentication value indicating the authentication level of the user. The authentication level may, for example, indicate a level of verifying the identity of the user; e.g., if the identity of the user has fulfilled all verification steps of a verification method, then the resulting authentication value indicates the highest authentication level; however, if only a part of the verification steps is fulfilled, then the resulting authentication value may indicate a lower authentication level. In another example, the authentication value may comprise the classification result.

In another aspect, the invention relates to a library comprising a pre-written routine for enabling the execution of the method of any of the preceding embodiments.

In another aspect, the invention relates to a computer-readable program code, the computer-readable program code being configured for performing at least part of the method of any of the preceding embodiments.

In another aspect, the invention relates to a communication device operating in a short-range radio-frequency band, the device being configured for packetizing a data item into a sequence of data packets, and broadcasting by the portable communication device the data packets over a connectionless channel in a short-range radio-frequency band.

In another aspect, the invention relates to a system being configured for intercepting data packets of at least one data item of a broadcaster, over a connectionless channel in a short-range radio-frequency band; using the data item for authenticating and/or identifying the broadcaster and in case the broadcaster is authenticated and/or identified, enabling the broadcaster to access a service enabled by the system.

In another aspect, the invention relates to an access control system being configured for intercepting data packets of at least one data item of a broadcaster, over a connectionless channel in a short-range radio-frequency band; using the data item for authenticating the broadcaster and in case the broadcaster is authenticated, enabling the broadcaster to access a service enabled by the access control system.

### BRIEF DESCRIPTION OF THE DRAWINGS

FIG. 1 is a flowchart of a method for enabling access to a service enabled by a computer system.
FIG. 2A depicts an example of an access control system in accordance with an example of the present subject matter.
FIG. 2B depicts an example of an access control system in accordance with an example of the present subject matter.
FIG. 2C depicts an example of an access control system in accordance with an example of the present subject matter.
FIG. 3 is a diagram illustrating a manufacturing network in accordance with an example of the present subject matter.
FIG. 4 depicts a diagram of a communication device in accordance with an example of the present subject matter.
FIG. 5A is a flowchart of a method for transmitting at least one data item in accordance with an example of the present subject matter.
FIG. 5B is a diagram illustrating a method for packetizing a data item in accordance with an example of the present subject matter.
FIG. 6 is a flowchart of a method for broadcasting data packets of multiple data items in accordance with an example of the present subject matter.
FIG. 7 is a flowchart of a method for broadcasting data packets of multiple data items in accordance with an example of the present subject matter.
FIG. 8 is a flowchart of a method for broadcasting data packets in accordance with an example of the present subject matter.
FIG. 9A is a flowchart of a method for transmitting a data item in accordance with an example of the present subject matter.
FIG. 9B is a diagram illustrating a method for splitting a session key in accordance with an example of the present subject matter.
FIG. 10A is a flowchart of a method for accessing the transmitted data items by a receiver in accordance with an example of the present subject matter.
FIG. 10B is a flowchart of a method for accessing the transmitted data items by a receiver in accordance with an example of the present subject matter.
FIG. 10C is a flowchart of a method for accessing the transmitted data items by a receiver in accordance with an example of the present subject matter.

Like reference symbols in the various drawings indicate like elements.

### DETAILED DESCRIPTION

The descriptions of the various embodiments of the present invention will be presented for purposes of illustration, but they are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, their practical application, or their technical improvement over technologies found in the marketplace, or to enable others of ordinary skill in the art to understand the embodiments disclosed herein.

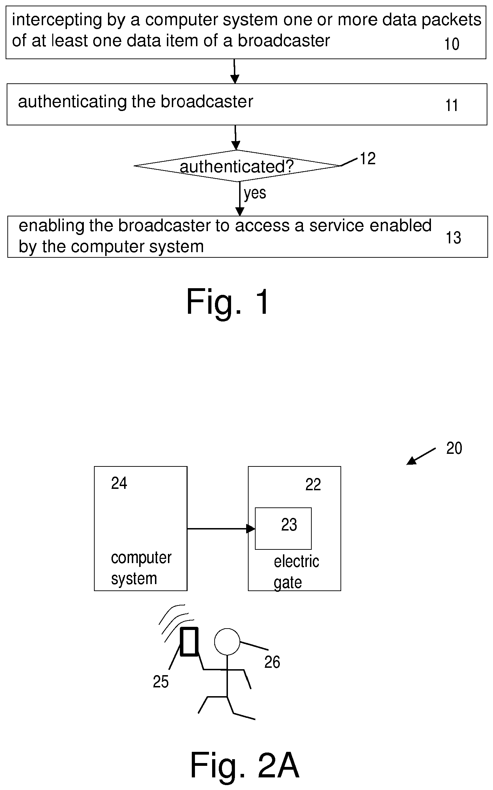

**Figure 1** is a flowchart of a method for enabling access to a service enabled by a computer system. The computer system may, for example, enable access to the service by executing one or more service instructions. After the execution of the service instructions, the service can be used by the broadcaster or the user of the broadcaster. The execution of the service instructions may control the computer system and/or other devices connected to or comprising the computer system to enable access to the service.

In step 10, the computer system may intercept one or more data packets of a data item of a broadcaster over a channel in a short-range radio-frequency band. The data packets may be advertising packets. The broadcasting of data packets may enable a connectionless communication, which may have an advantage over a connection-oriented communication in that it has low overhead. In accordance with the connectionless communication, the broadcaster transmits data without first ensuring that the recipient is available and ready to receive the data. The channel may be a connectionless channel that is used to broadcast information between unconnected devices. Using the connectionless channel may prevent the establishment of a physical data channel or connection in a dialogue preceding the broadcast of data items. If multiple data items are broadcast, the data items may be reassembled at the computer system using respective data packets, and the authentication and/or identification may be performed using each of at least part of the data items; e.g., if one of the data items indicates that the broadcaster is authenticated (or authorized to access the service), the service may be enabled.

For example, the broadcaster may be the telecommunication device as described herein. The data item may, for example, comprise a data item that is broadcast by the telecommunication device as described herein, e.g., using the communication method.

The computer system may, for example, be a Bluetooth-enabled device that is configured to operate as a passive scanner for listening to advertising packets. By performing the listening, the computer system may receive or intercept the one or more data packets over the connectionless channel in the short-range radio-frequency band. For example, the computer system may be configured to perform the listening or scanning in accordance with a scan window and a scan interval, wherein the scan interval may be the interval between the start of two consecutive scan windows, and the scan window may be the duration in which the scan on one channel is being performed by the computer system.

For example, the computer system may comprise an application having instructions, wherein execution of the instructions by a processor of the computer system causes the computer system to be in a listening mode for performing a passive scanning by listing to advertising packets. By performing the listening, the computer system may receive or intercept the one or more data packets in step 10.

The broadcaster is configured to packetize (break) a data item into data packets that can later be reassembled by the computer system. The computer system may, for example, use an identification field in the received data packets to ensure that data packets of different data items are not mixed. The identification field provides sufficient information to reassemble the broadcasted data items. For example, each data packet of the received data packets comprises a sequence number indicative of a transmission order of the data packet within a sequence of the data packets forming the data item e.g. the sequence number may indicate the position of a data packet in the data item. Each data packet of the received data packets further comprises an index indicative of the data item and the number of data packets in the data items. For example, the broadcaster may send data packets P1, P2, and P3 of a data item X, wherein packet P1 has a header that comprises a sequence number 1 and an index 999, packet P2 has a header that comprises a sequence number 2 and the same index, 999, and packet P3 has a header that comprises a sequence number 3 and the same index, 999. Upon receiving the packets P1, P2, and P3, the computer system may read the sequence numbers and the index, 999, to determine that P1, P2, and P3 are part of the same data item X and they are the only packets forming the data item X. The packets P1, P2, and P3 may then be reassembled following the sequence numbers in order to reconstruct the data item X. The reconstructed data item may be used to perform steps 11 and 12.

In step 11, the data item may be used for authenticating the broadcaster. The data item may, for example, comprise a user ID that can be used to authenticate the broadcaster. The authentication, may for example, comprise checking whether the user ID is an ID of a user that is authorized to access the service.

If (inquiry step 12) the broadcaster is authenticated, in that the broadcaster is authorized to access the service enabled by the computer system, the broadcaster is enabled in step 13 to access a service enabled by the computer system. Enabling the broadcaster to access the service comprises enabling the user who is holding or using the broadcaster to access the service. In case the broadcaster is not authenticated (the broadcaster or its user is not authorized to access the service), the broadcaster is not enabled to access the service.

**Figure 2A** depicts an example of an access control system 20 in accordance with an example of the present subject matter. The access control system 20 comprises an electric gate 22. The electric gate 22 may, for example, be a sliding door or another type of electric gate that may enable or prevent access to a secured area. The electric gate 22 comprises a motor 23. The access control system 20 further comprises a computer system (or controller) 24 that supplies a control signal to the motor 23 so as to control the motor 23 to drive the electric gate 22 to enable or prevent access to an area e.g. thereby automatically opening or closing the sliding door 22. The computer system 24 may include a processor and a computer-readable medium. In one example, the computer system 24 may be integrated with the motor 23.

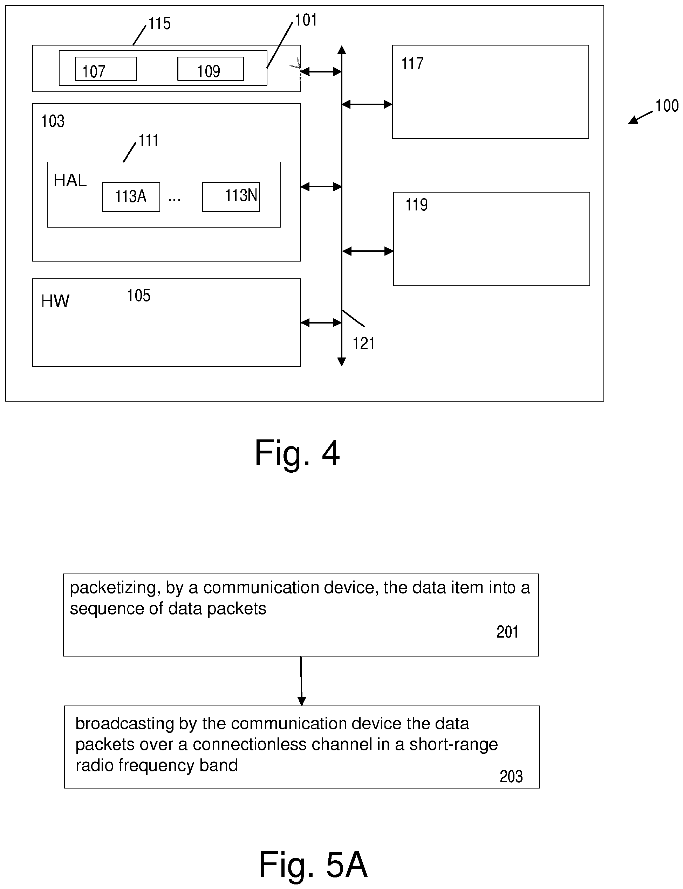

The computer system 24 may be configured in accordance with the present subject matter (e.g., as described with reference to Figure 1). For example, a broadcaster 25 such as a mobile phone may broadcast data packets of a data item, e.g., as described with Figure 5A. For example, the broadcaster may be assigned one or more given channels, e.g., advertising channels, such as channel 37 (2402 MHz), channel 38 (2426 MHz), and channel 39 (2480 MHz), such that the broadcaster may broadcast data packets using the given channels.

The data item may, for example, indicate a user identity of the user 26 holding the broadcaster. The computer system 24 may be configured to receive broadcasted data packets and to reassemble received data packets into the respective data item. The computer system 24 may use the data item (e.g., user identity) to authenticate the broadcaster 25. Authenticating the broadcaster 25 comprises authenticating the user 26 holding the broadcaster 25. If the broadcaster 25 is authenticated, the computer system 24 may send a control signal to the motor 23 so that the electric gate can be opened so that the user 26 can enter the secured area.

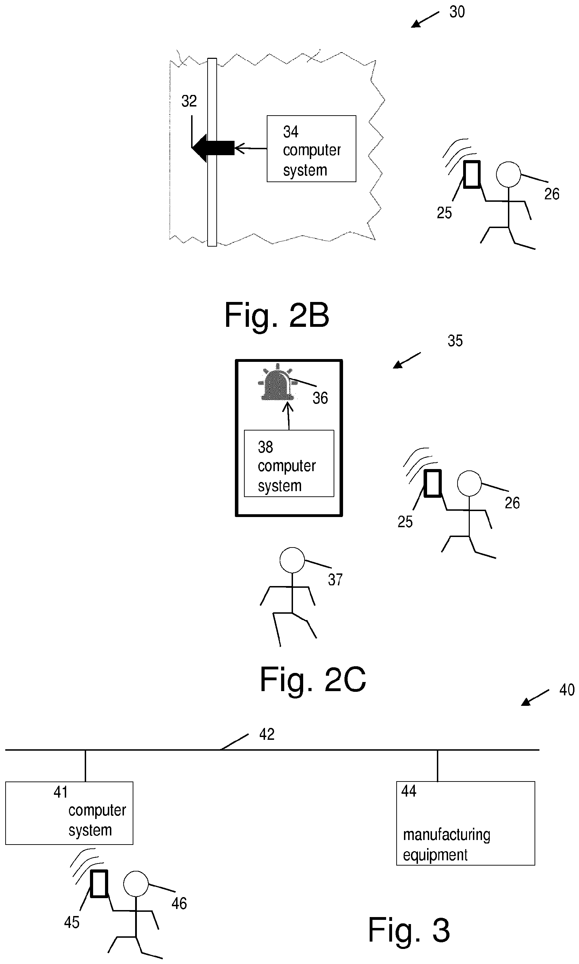

**Figure 2B** depicts an example of an access control system 30 in accordance with an example of the present subject matter. The access control system 30 comprises a door having a computer system 34 that is connected to a locking means 32 of the door. The locking means may, for example, be an electric bolt lock. The computer system 34 may control operation of a drive motor for closed and open positioning of the locking means 32. For example, if the broadcaster 25 is authenticated, the computer system 34 may send a control signal to the drive motor so that the locking means can be released and the user 26 can enter the secured area.

**Figure 2C** depicts an example of an access control system 35 in accordance with an example of the present subject matter. The access control system 35 comprises a computer system 38 that is connected to a signaling means 36. The signaling means may, for example, comprise a stroboscopic lamp or other means that can notify or indicate to an access control person 37 whether the user 26 is authenticated. The signaling means 36 may, for example, be configured to output an acceptance or warning signal in the form of a light signal and/or audio signal. For example, if the broadcaster 25 is authenticated, the computer system 38 may control the signaling means 36 to output the acceptance signal; otherwise, the computer system 38 may control the signaling means 36 to output the warning signal. An access control person 37 may enable or prevent access to the secured area based on the output signal.

**Figure 3** is a diagram illustrating a production system, such as manufacturing network 40. The manufacturing network 40 comprises a connection means 42, which provides for communication. The manufacturing network 40 may physically be located on one or more sites. The connection means 42 may, for example, be provided by known physical wiring technologies, such as 10BaseT or the like, or communication networks such as a local area network (LAN), a wireless local area network (WLAN), internet, etc.

As illustrated, connected to connection means 42 are a computer system 41 and manufacturing equipment 44, which includes, but is not limited to, robots, conveyors, vehicle carriers, computer terminals for data input and output, repair and inspection robots, and the like. In one example, manufacturing equipment 44 may connect directly to the connection means 42; e.g., the manufacturing equipment may receive control signals from the computer system via the connection means 42. In another example, manufacturing equipment 44 may connect to the connection means 42 via programmable logic controllers (PLCs). The PLCs may be used to control the manufacturing equipment 44.

The computer system 41 may, for example, be an electronic control panel that enables input of data from line workers, management, and other users 46 and output of data; e.g., the input and output of data may be real-time input and output. For example, data corresponding to defects identified or repairs performed by an associate relating to a specific vehicle may be inputted into a computer system 41 by use of an input device such as a keyboard, touch screen, bar code reader, or the like. This information would then be available to other terminals or networked devices and may, for example, be used for controlling the manufacturing equipment 44. However, the user 46 can enter data and/or read data from the computer system only if he or she is authenticated by the computer system 41. The authentication may, for example, be performed as described herein. For example, a broadcaster 45 such as a mobile phone of the user may broadcast data packets of a data item, e.g., as described in Figure 5A. The data item may, for example, indicate a user identity of the user 46 holding the broadcaster. The computer system 41 may be configured to receive broadcasted data packets and to reassemble received data packets into the respective data item. The computer system 41 may use the data item (e.g., user identity) to authenticate the broadcaster 45. Authenticating the broadcaster 45 comprises authenticating the user 46 holding the broadcaster 45. If the broadcaster 45 is authenticated, the computer system 41 may enable the user 46 to access data at the computer system to control at least part of the manufacturing equipment 44. For example, depending on the authenticated user, the computer system 41 may display a GUI that the user 46 can use to control operation of at least part of the manufacturing equipment 44.

**Figure 4** depicts a diagram of a communication device (such as broadcaster 25 or 45) in accordance with an example of the present subject matter. The communication device 100 may be a mobile Bluetooth-enabled communication device, but it is not limited to this type of device.

Components (or layers) of the communication device 100 comprise an application component 101, a firmware component 103, and a hardware component 105.

The application component 101 comprises, for example, a first application 107 and a second application 109. The first application may, for example, be a system app, e.g., of an Android software stack or iOS software stack, that provides capabilities of the present method and that developers can access from their own app. For example, the second application 109 may be a mobile app that is configured to invoke the system app 107 for transmitting data items.

The firmware component 103 may implement the interface between the application component 101 and the hardware component 105. The firmware component 103 may comprise application programming interfaces (APIs) that are needed to implement various services such as services that are enabled by the hardware component 105. The firmware component may, for example, comprise a hardware abstraction layer (HAL) 111. The hardware abstraction layer 111 may enable configuration of multiple advertisers 113A-N. For example, each advertiser may be assigned a respective advertisement time frame, such that the advertiser may control the hardware component 105 to broadcast data in accordance with the assigned advertisement time frame. In another example, each advertiser may be assigned a given channel, e.g., one of the advertising channels - channel 37 (2402 MHz), channel 38 (2426 MHz), or channel 39 (2480 MHz) - such that the advertiser may control the hardware component 105 to broadcast data using the channel that is assigned to the advertiser. This may enable a modular and flexible implementation of the broadcasting by the present subject matter. The advertisers enable the communication device to transmit data without connecting to a receiver.

The hardware component 105 may, for example, be a Bluetooth chipset. The hardware component 105 may comprise an analog communications circuitry used, for example, for modulating and demodulating analog signals and transforming them into digital symbols. The communication using the hardware component 105 may be performed over multiple channels in a short-range radio-frequency band, e.g., from 2.4000 GHz to 2.4835 GHz. A frequency-hopping spread spectrum technique in which the radio of the hardware component 105 hops between channels on each connection event may be used. This technique minimizes the effect of radio interference.

The application component 101 may, for example, be stored in memory 115. The memory 115 may include a computer system-readable media in the form of volatile memory, such as random access memory (RAM) and/or cache memory. The firmware component may be stored in memory such as ROM of the communication device 100. The communication device 100 may further comprise one or more processors or processing units 117, a storage system 119, and a bus 121 that couples the various components to the processor 117. The storage system 121 may include, for example, a hard disk drive (HDD).

The operation of the communication device 100 is described with reference to the following figures.

The diagram of Figure 4 may also describe the structure of the computer system 24 or 41.

**Figure 5A** is a flowchart of a method for transmitting at least one data item in accordance with an example of the present subject matter. The data item may, for example, be received at a communication device such as the communication device 100 from a user. The term "user" refers to a computer such as the communication device or an application executing on the computer that issues requests to transmit data items.

For example, the first application 107 comprises instructions, wherein execution of the instructions by a processor of the communication device 100 causes the communication device to receive the data item. In another example, the execution of the instructions of the first application by the processor causes the communication device to access (or read) the data item in a storage system of the communication device or to access the data item in a storage system of another computer system to which the communication device can be connected. The execution of the instructions of the first application by the processor further causes the communication device to execute at the method of Figure 2A.

The first application 107 may, for example, comprise a client-side or front-end application that enables interactions with one or more second applications. The second application may, for example, be part of the communication device. For example, the data item may be received by the first application from the second application via the client side. The first application may, for example, be a system app, e.g., of an Android software stack or iOS software stack, that provides capabilities of the present method and that developers can access from their own app. For example, the second application may be a mobile app that is configured to invoke the system app, enabling the present subject matter to transmit the data item.

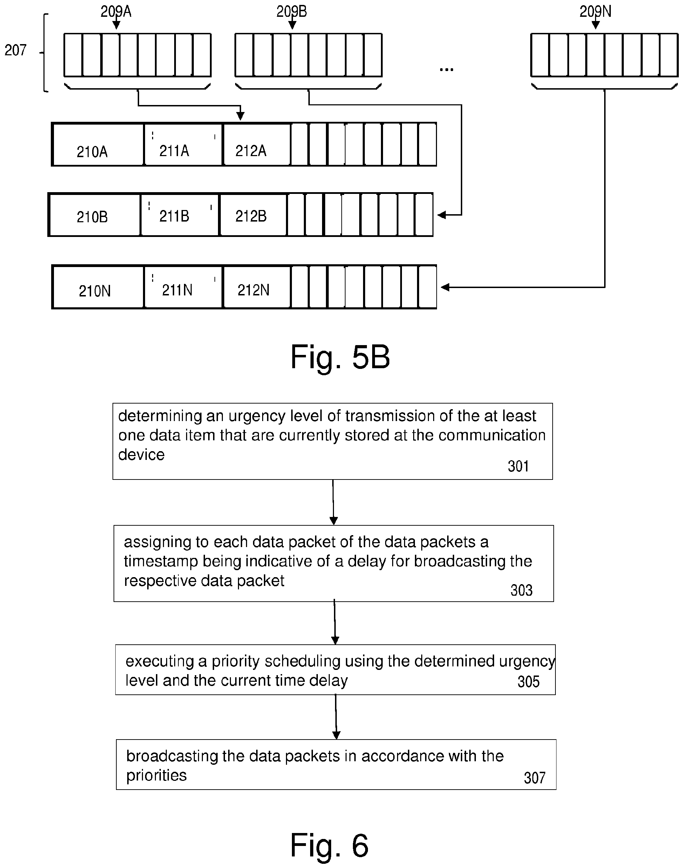

In step 201, the communication device 100 may packetize the data item into a sequence of data packets. As illustrated in Figure 2B, the data item 207 is packetized into data packets 209A-N. Each of the data packets may be a group of data bits, as illustrated by cells of the data packets. In one example, header information may be added to each of the data packets 209A-N. As indicated in Figure 2B, the header information may, for example, comprise for each of the data packets 209A-N a respective order number 210A-N. The order number 210A-N provides a single identifier uniquely identifying the data packet in the respective data item 207. The header information may further comprise for each of the data packets 209A-N an index 211A-N identifying the data item 207 to which the data block belongs. This may result in the data packets 209A-N having the same index 211AN, as they belong to the same data item 207. The header information may further comprise for each of the data packets 209A-N a count value 212A-N. The count value 212A-N is indicative of a transmission time or transmission order of the respective data packet 209A-N by the communication device 100. For example, the count value 212A-N may be initialized such that it can be changed in each data packet before transmission of the data packet. After the header information is added, the resulting data packets 209A-N as shown in Figure 5B have a predefined data packet structure that is known to a receiver of the data packets. The receiver may read the content of the data packets 209A-N and combine/assemble the data packets in accordance with the data structure.

In step 203, the communication device may broadcast the data packets over a connectionless channel in a short-range radio-frequency band. For example, the first application may comprise instructions that, when executed, invoke a broadcasting feature of the communication device. With the broadcasting feature, the communication device becomes an advertiser that is non-connectable as it transmits the data in the connectionless channel. The communication device may be a short-range device (SRD). The communication device may operate in accordance with one or more predefined frequency bands that are classified as short-range radio-frequency bands. For example, the short-range radio-frequency band may be 2400.0-2483.5 MHz.

In one example, steps 201-203 may be used to transmit a session key to a receiver in accordance with a key-exchange protocol. The data item may be the session key, and the broadcasting of the data item (session key) may be a step of the key-exchange protocol.

**Figure 6** is a flowchart of a method for broadcasting data packets (i.e., further detailing step 203) of multiple data items in accordance with an example of the present subject matter.

The multiple data items may be received at the communication device 100 from multiple applications such as the second application 109. The received data items may be stored in a storage system of the communication device 100. Each data item of the multiple data items may be associated with an urgency level in step 301. The urgency level may, for example, be an integer, e.g., ranging from 1 to 10.

In one example, the first application may provide a list of possible urgency levels that the second applications 109 have to choose for their data item transmission. For example, the receiving of the data item further comprises receiving an urgency level associated with said data item. This may enable a systematic and controlled processing of data items. This may, for example, prevent receiving the same data item multiple times; e.g., the user who wants his or her data item to be urgently sent can select the highest level of urgency, and then he or she can be confident that the data item would be processed accordingly. This is in contrast to the case where there is no enabled selection of urgency levels, as the user may not know whether his or her data item is being processed and may then retry to submit it again.

In another example, the urgency level may be determined (e.g., by the first application) based on the sender of the data items. If, for example, the second application is a real-time application such as a navigation application or a real-time flight-booking application, the data item received from the second application may be assigned the highest level of urgency. If, however, the second application is a static application such as a calculator application or a dictionary application, the data item received from the second application may be assigned a lower level of urgency.

The multiple data items may be packetized in accordance with the present subject matter, e.g., as described with reference to Figure 2. This may result in a number of data packets that are to be transmitted by the communication device, wherein each data packet is associated with an urgency level of the respective data item. However, other features may be needed to complement the urgency level to enable optimal transmission of data. For that, in step 303, each data packet of the data packets of the multiple data items may be assigned a time stamp indicating a delay for broadcasting said data packet. The time stamp may, for example, be assigned to the data packet only once, at the time it is processed for its first transmission (e.g., a data packet may be retransmitted multiple times). By comparing the time stamp with the current time (e.g. of the current iteration), the delay for broadcasting may be deduced.

In step 305, priority scheduling may be executed using the determined urgency levels and the current time delays (of the data packets of the current iteration). This may enable to calculate priorities of the data packets. For example, a model or function may be used to combine the urgency level with the delay to determine a priority for the transmission; e.g., a data packet associated with the highest urgency level and having the longest delay may be assigned the highest priority, etc.

In step 307, the data packets of the multiple data items may be broadcasted in accordance with the priorities over a connectionless channel in a short-range radio-frequency band e.g. the packet may be broadcasted following a descending order of the priorities e.g. the data packet with the highest priority may be broadcasted first etc.

Steps 301-307 may, for example, be repeated on a periodic basis, e.g., every minute or every 10 minutes. In another example, if the communication device is a Bluetooth-enabled device, the repetition may be performed every advertising interval. In each iteration, different sets of data packets may be stored; e.g., in a first iteration, a set of packets p1, p2, and p5 may be stored, while in the next iteration, another set of packets p5, p10, p4, and p11 may be stored, etc. The sets of packets of different iterations may comprise or share the same packets, e.g., p5. In each iteration, if a data packet (e.g., p5) is already assigned a time stamp, that time stamp may be maintained (or reassigned again to p5). The priority scheduling may be determined for the current packets of the current iteration.

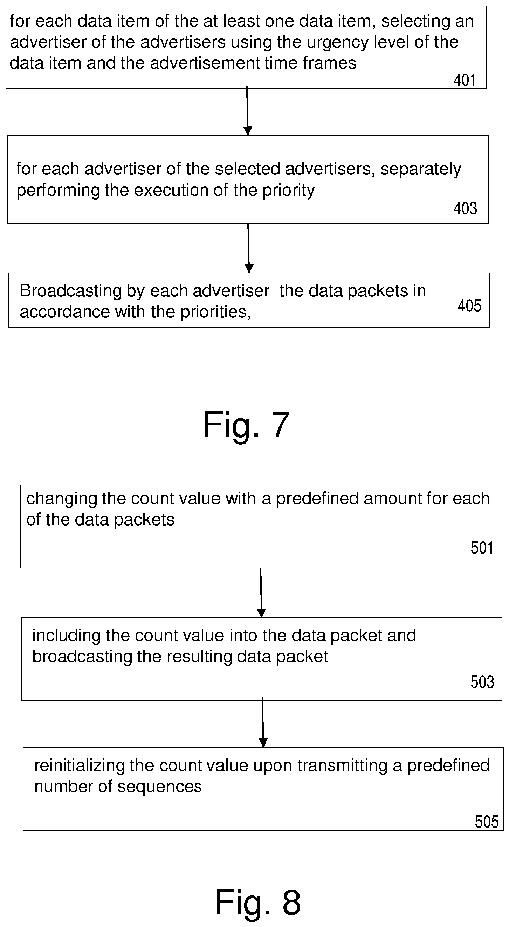

**Figure 7** is a flowchart of a method for broadcasting data packets of multiple data items in accordance with an example of the present subject matter.

In step 401, for each data item of the multiple data items, an advertiser of the advertisers 113A-N of the hardware abstraction layer 111 may be selected using the urgency level of the data item and the advertisement time frames. For example, the higher the urgency level, the smaller the selected advertisement time frame. This may further improve and optimize data transmission. This may, for example, result in an advertiser being selected for one or more data items.

For each advertiser of the selected advertisers, a separate execution of step 305 (in step 403) may be performed. That is, the priority scheme may be performed using the urgency level and the current time delays of data packets for which said advertiser is selected.

Each of the selected advertisers may broadcast in step 405 the associated data packets in accordance with their calculated priorities.

**Figure 8** is a flowchart of a method for broadcasting data packets (e.g., further detailing step 203) in accordance with an example of the present subject matter.

In step 501, the count value 212A-N may be changed with a predefined amount for each of the data packets. For example, the count value may be incremented by one.

The changed count value may be included in step 503 in the data packet 209A-N so the resulting data packet is broadcast.

In step 505, the count value may be reinitialized upon transmitting a predefined number of sequences. This may be advantageous, as the receiver of data packets may use the count value to check the time gap between the received consecutive data packets of the same data item, and, based on the time gap, it may detect a possible replay attack. For example, if the time gap is longer than a predefined threshold, this may indicate a possible replay attack.

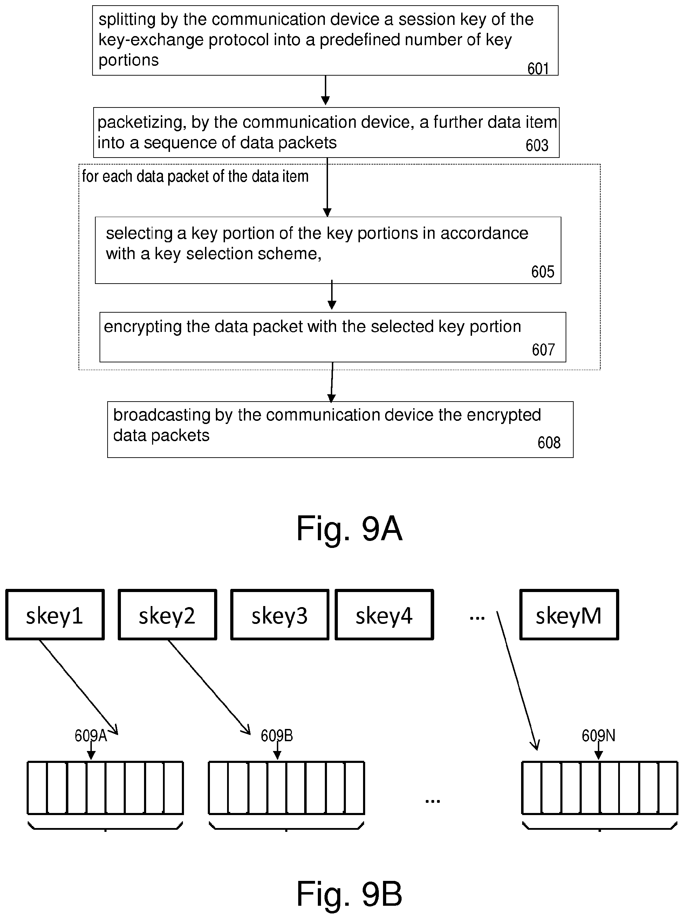

**Figure 9A** is a flowchart of a method for transmitting a data item in accordance with an example of the present subject matter. For example, a session key is already exchanged or transmitted by the communication device to a receiver, e.g., in accordance with the key-exchange protocol.

The communication device may split or divide in step 601 the session key into a predefined number of key portions. This is illustrated in Figure 9B, where the session key *skey* is split into M key portions *skey1, skey2 to skeyM.*

The communication device may packetize in step 603 the data item into a sequence of data packets 609A to 609N, e.g., as described with the present subject matter.

For each data packet 609.A to 609.N of the data item, a key portion of the key portions *skey1 to skeyM* may be selected in step 605 in accordance with a key selection scheme. For example, the selection scheme may require that the key portions are used following the ascending order of the numbers 1 to M (as illustrated in Figure 9B). That is, the key portion *skey1* would first be selected, followed by *skey2,* followed by *skey3,* and so on. In another example, any predefined order (e.g., user-defined order) of key portion selection can be used. For example, the selection scheme may indicate that key portion *skey3* is first selected, followed by *skey7,* then followed by *skey2,* and so on. This may render the selection scheme not predictable, and thus the transmission of data may further be secured. In another example, the selection scheme may require using the same key portion for encrypting packets of the same data item but different key portions for different data items. The receiver may be configured to perform step 603 to split on its side the session key. The receiver may also have access to the selection scheme such that it can be used for decrypting the data packets.

In step 607, the data packet 609.A-N may be encrypted with the selected key portion.

In step 609, the communication device may broadcast the encrypted data packets 609.1-N of the data item over a connectionless channel in a short-range radio-frequency band.

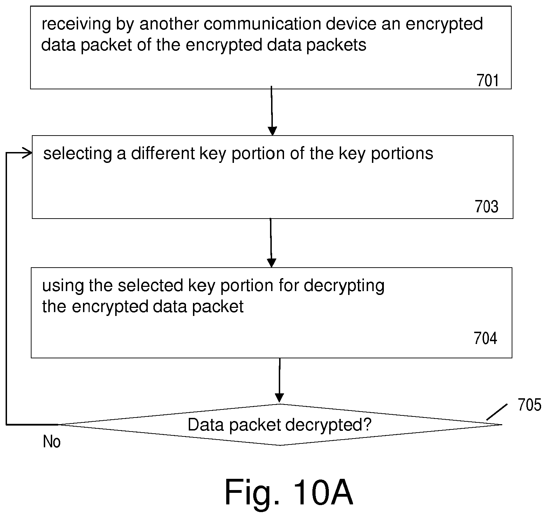

**Figure 10A** is a flowchart of a method for accessing the transmitted data items by a receiver (e.g., the computer system 24 or 41) in accordance with an example of the present subject matter.

The receiver may receive in step 701 an encrypted data packet of the encrypted data packets that have been transmitted, e.g., as described with reference to Figure 9A-B.

In step 703, the receiver may select a different key portion of the key portions *sekey1 to skeyM* and use in step 704 the selected key portion for decrypting the received encrypted data packet. This selection may be a random selection.

If (inquiry step 705) the encrypted data packet is not decrypted, steps 701 to 705 may be repeated until the data packet is decrypted.

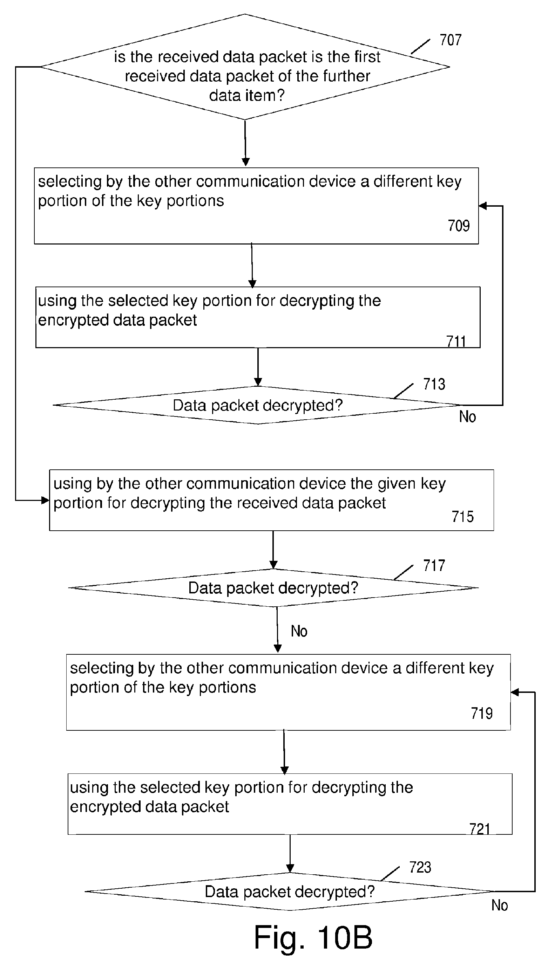

**Figure 10B** is a flowchart of a method for accessing the transmitted data items by a receiver in accordance with an example of the present subject matter. For example, the receiver (e.g., the computer system 24 or 41) may receive encrypted data packets of a given data item as transmitted by the communication device, e.g., as described with reference to Figure 9A-B.

Upon receiving an encrypted data packet, the receiver may determine, in inquiry step 707, whether the received encrypted data packet is the first received data packet of the given data item. This may, for example, be performed by reading and using the header information of the received encrypted data packet, e.g., by using the index 211A-N of the received data packet and determining whether another data packet with the same index has already been received at the receiver (e.g., the computer system).

If (inquiry step 707) the received encrypted data packet is the first received data packet of the given data item, the receiver may select in step 709 a key portion of the key portions *sekey1 to skeyM.* In step 711, the receiver may use the selected key portion for decrypting the encrypted data packet. If (inquiry step 713) the encrypted data packet is not decrypted, steps 709 to 713 may be repeated until the data packet is decrypted.

If (inquiry step 707) the received encrypted data packet is not the first received data packet of the given data item, the receiver may first try or use in step 715 the previously used key portion that has been used for decryption in step 711 of the first received encrypted data packet. This may be advantageous in case the data packets of the same data item are encrypted with the same key portion.

If (inquiry step 717) the encrypted data packet is not decrypted by the previously used key portion, the receiver may select in step 719 a different key portion of the key portions *sekey1 to skeyM* that is different from the previously used key portion. In step 721, the receiver may use the selected key portion for decrypting the encrypted data packet. If (inquiry step 723) the encrypted data packet is not decrypted, steps 709 to 713 may be repeated until the data packet is decrypted.

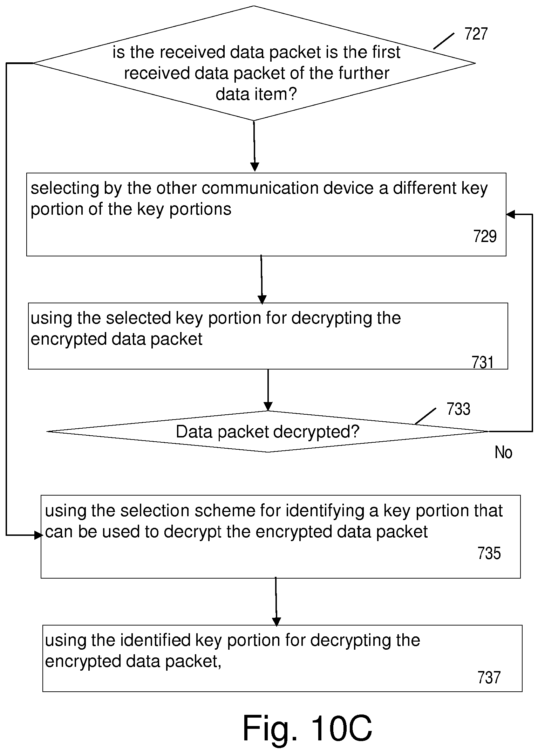

**Figure 10C** is a flowchart of a method for accessing the transmitted data items by a receiver in accordance with an example of the present subject matter. For example, the receiver may receive encrypted data packets of a given data item as transmitted by the communication device, e.g., as described with reference to Figure 9A-B.

Upon receiving an encrypted data packet, the receiver may determine, in inquiry step 727, whether the received encrypted data packet is the first received data packet of the given data item. This may, for example, be performed by reading and using the header information of the received encrypted data packet, e.g., by using the index 211A-N of the received data packet and determining whether another data packet with the same index has already been received.

If (inquiry step 727) the received encrypted data packet is the first received data packet of the given data item, the receiver may select in step 729 a key portion of the key portions *sekey1 to skeyM.* In step 731, the receiver may use the selected key portion for decrypting the encrypted data packet. If (inquiry step 733) the encrypted data packet is not decrypted, steps 739 to 733 may be repeated until the data packet is decrypted.

If (inquiry step 727) the received encrypted data packet is not the first received data packet of the given data item, the receiver may use the selection scheme for identifying in step 735 a key portion of the key portions *sekey1 to skeyM* that can be used to decrypt the encrypted data packet. In step 737, the receiver may use the identified key portion for decrypting the encrypted data packet.

The methods of Figures 7A-C may be performed or repeated for each data packet that is received at the receiver. The receiver may further combine or assemble the received data packets using the order numbers 210A-N and indexes 211A-N to build the data items that have been transmitted.

## Claims

1. An access method comprising: intercepting (10) by a computer system (24, 41) one or more data packets of at least one data item of a broadcaster (25, 45, 100) over a connectionless channel in a short-range radio-frequency band; using the data item for identifying and authenticating the broadcaster; and in case the broadcaster is identified and authenticated, enabling the broadcaster to access a service enabled by the computer system (24, 41), wherein a data item of the at least one data item is a session key, wherein the data packets of one or more further data items of the at least one data item are encrypted by the session key, the method further comprising splitting the session key into a predefined number of key portions; repeatedly selecting a different key portion of the key portions, and using the selected key portion for decrypting the encrypted data packet, until the encrypted data packet is decrypted.

2. The method of claim 1, the computer system (24) comprised in an access control system (20), wherein the enabling access comprises enabling access to a secured area in case the broadcaster is authenticated.

3. The method of claim 1, the computer system (41) being an electronic control panel of a production system (40) wherein the enabling access comprises displaying control information in the electronic control panel (41), and controlling the production system (40) in accordance with a selection of one of the displayed information.

4. The method of claim 1, the enabling access comprising enabling execution of one or more software applications in case the broadcaster is authenticated and/or enabling access to stored information of the computer system in case the broadcaster is identified.

5. The method of claim 3 or 4, further comprising repeating the authentication and/or identification step and in case the broadcaster is further authenticated continue the enabling of the access; otherwise preventing the access to the broadcaster.

6. The method of any of the preceding claims, wherein each data packet of the data packets comprises a sequence number indicative of a transmission order of the data packet within a sequence of the data packets forming the data item, and an index indicative of the data item, the method further comprising using the sequence number and the index for combining the intercepted data packets that form a single data item of the at least one data item.

7. The method of any of the preceding claims, wherein each data packet of the data packets comprises a count value indicative of a transmission time or transmission order of the respective data packet by the broadcaster, the method further comprising:
determining using the count value of the data packet a time gap between the reception of the data packet and another received data packet of the data item;
if the time gap is longer than a predefined threshold generating a signal indicating a suspected replay attack.

8. The method of any of the preceding claims, further comprising receiving data packets of an authentication data item, the authentication data item comprising a behavioral authentication level value, the behavioral authentication level value indicating an authentication level of a user of the broadcaster, wherein the enabling of the broadcaster to access the service is performed only if the behavioral authentication level value fulfills a predefined behavioral authentication condition.

9. A library comprising pre-written machine-readable instructions which, when loaded on and executed by a computer, execute the method recited by any of the preceding claims 1-8.

10. An access system (24, 41) being configured for intercepting data packets of at least one data item of a broadcaster (25, 45, 100), over a connectionless channel in a short-range radio-frequency band; using the data item for authenticating and identifying the broadcaster and in case the broadcaster is authenticated and identified, enabling the broadcaster to access a service enabled by the control system, wherein a data item of the at least one data item is a session key, wherein the data packets of one or more further data items of the at least one data item are encrypted by the session key, the system being further configured for splitting the session key into a predefined number of key portions; repeatedly selecting a different key portion of the key portions, and using the selected key portion for decrypting the encrypted data packet, until the encrypted data packet is decrypted.

## Patentansprüche

1. Zugriffsverfahren, umfassend: Abfangen (10), durch ein Computersystem (24, 41), eines oder mehrerer Datenpakete von mindestens einem Datenelement eines Senders (25, 45, 100) über einen verbindungslosen Kanal in einem Funkfrequenzband mit kurzer Reichweite; Verwenden des Datenelements zum Identifizieren und Authentifizieren des Senders; und, falls der Sender identifiziert und authentifiziert ist, Ermöglichen, dass der Sender auf einen durch das Computersystem (24, 41) aktivierten Dienst zugreift, wobei ein Datenelement des mindestens einen Datenelements ein Sitzungsschlüssel ist, wobei die Datenpakete von einem oder mehreren weiteren Datenelementen des mindestens einen Datenelements durch den Sitzungsschlüssel verschlüsselt werden, wobei das Verfahren ferner umfasst: Aufteilen des Sitzungsschlüssels in eine vordefinierte Anzahl von Schlüsselabschnitten; wiederholtes Auswählen eines anderen Schlüsselabschnitts der Schlüsselabschnitte, und Verwenden des ausgewählten Schlüsselabschnitts zum Entschlüsseln des verschlüsselten Datenpakets, bis das verschlüsselte Datenpaket entschlüsselt ist.

2. Verfahren nach Anspruch 1, wobei das Computersystem (24) in einem Zugriffssteuerungssystem (20) enthalten ist, wobei der ermöglichende Zugriff ein Ermöglichen des Zugriffs auf einen gesicherten Bereich umfasst, falls der Sender authentifiziert ist.

3. Verfahren nach Anspruch 1, wobei das Computersystem (41) ein elektronisches Bedienfeld eines Produktionssystems (40) ist, wobei der ermöglichende Zugriff das Anzeigen von Steuerungsinformationen in dem elektronischen Bedienfeld (41) und das Steuern des Produktionssystems (40) entsprechend einer Auswahl von einer der angezeigten Informationen umfasst.

4. Verfahren nach Anspruch 1, wobei der ermöglichende Zugriff ein Ermöglichen der Ausführung einer oder mehrerer Softwareanwendungen, falls der Sender authentifiziert ist, und/oder ein Ermöglichen des Zugriffs auf gespeicherte Informationen des Computersystems, falls der Sender identifiziert ist, umfasst.

5. Verfahren nach Anspruch 3 oder 4, ferner umfassend das Wiederholen des Authentifizierungs- und/oder Identifizierungsschritts und, falls der Sender weiter authentifiziert wird, das Fortsetzen des Ermöglichens des Zugriffs; anderenfalls das Verhindern des Zugriffs auf den Sender.

6. Verfahren nach einem der vorangehenden Ansprüche, wobei jedes Datenpaket der Datenpakete eine Sequenznummer, die eine Übertragungsreihenfolge des Datenpakets innerhalb einer Sequenz der das Datenelement ausbildenden Datenpakete angibt, und einen für das Datenelement bezeichnenden Index umfasst, wobei das Verfahren ferner das Verwenden der Sequenznummer und des Index zum Kombinieren der abgefangenen Datenpakete, die ein einzelnes Datenelement des mindestens einen Datenelements ausbilden, umfasst.

7. Verfahren nach einem der vorangehenden Ansprüche, wobei jedes Datenpaket der Datenpakete einen Zählwert umfasst, der für eine Übertragungszeit oder Übertragungsreihenfolge des jeweiligen Datenpakets durch den Sender bezeichnend ist, wobei das Verfahren ferner umfasst:
unter Verwendung des Zählwerts des Datenpakets Bestimmen einer Zeitlücke zwischen dem Empfang des Datenpakets und eines weiteren empfangenen Datenpakets des Datenelements;
falls die Zeitlücke länger als ein vordefinierter Schwellenwert ist, Erzeugen eines Signals, das einen vermuteten Wiederholungsangriff angibt.

8. Verfahren nach einem der vorangehenden Ansprüche, ferner umfassend das Empfangen von Datenpaketen eines Authentifizierungsdatenelements, wobei das Authentifizierungsdatenelement einen Verhaltensauthentifizierungsniveauwert umfasst, wobei der Verhaltensauthentifizierungsniveauwert ein Authentifizierungsniveau eines Benutzers des Senders angibt, wobei das Ermöglichen, dass der Sender auf den Dienst zugreift, nur ausgeführt wird, wenn der Verhaltensauthentifizierungsniveauwert eine vordefinierte Verhaltensauthentifizierungsbedingung erfüllt.

9. Bibliothek mit vorab geschriebenen maschinenlesbaren Anweisungen, die, wenn sie auf einen Computer geladen und von ihm ausgeführt werden, das Verfahren nach einem der vorangehenden Ansprüche 1 bis 8 ausführen.

10. Zugriffssystem (24, 41), konfiguriert zum Abfangen von Datenpaketen von mindestens einem Datenelement eines Senders (25, 45, 100) über einen verbindungslosen Kanal in einem Funkfrequenzband mit kurzer Reichweite; Verwenden des Datenelements zum Authentifizieren und Identifizieren des Senders, und falls der Sender authentifiziert und identifiziert ist, Ermöglichen, dass der Sender auf einen durch das Steuerungssystem aktivierten Dienst zugreift, wobei ein Datenelement des mindestens einen Datenelements ein Sitzungsschlüssel ist, wobei die Datenpakete von einem oder mehreren weiteren Datenelementen des mindestens einen Datenelements durch den Sitzungsschlüssel verschlüsselt werden, wobei das System ferner zum Aufteilen des Sitzungsschlüssels in eine vordefinierte Anzahl von Schlüsselabschnitten; wiederholten Auswählen eines anderen Schlüsselabschnitts der Schlüsselabschnitte und Verwenden des ausgewählten Schlüsselabschnitts zum Entschlüsseln des verschlüsselten Datenpakets, bis das verschlüsselte Datenpaket entschlüsselt ist, konfiguriert ist.

## Revendications

1. Procédé d'accès comprenant : l'interception (10), par un système informatique (24, 41), d'un ou de plusieurs paquets de données d'au moins un élément de donnée d'un radiodiffuseur (25, 45, 100) sur un canal sans connexion dans une bande de fréquences radio de courte portée ; l'utilisation de l'élément de donnée pour identifier et authentifier le radiodiffuseur ; et, dans le cas où le radiodiffuseur est identifié et authentifié, permettre au radiodiffuseur d'accéder à un service activé par le système informatique (24, 41), où un élément de donnée parmi l'au moins un élément de donnée est une clé de session, où les paquets de données d'un ou de plusieurs autres éléments de données parmi l'au moins un élément de donnée est ou sont chiffrés par la clé de session, le procédé comprenant en outre la division de la clé de session en un nombre prédéfini de parties de clé ; la sélection de manière répétée d'une partie de clé différente parmi les parties de clé, et l'utilisation de la partie de clé sélectionnée pour déchiffrer le paquet de données chiffrées jusqu'à ce que le paquet de données chiffrées soit déchiffré.

2. Procédé selon la revendication 1, le système informatique (24) étant composé d'un système de contrôle d'accès (20), où l'activation d'accès comprend l'activation d'accès à une zone sécurisée dans le cas où le radiodiffuseur est authentifié.

3. Procédé selon la revendication 1, le système informatique (41) étant un panneau de contrôle électronique d'un système de production (40) où l'activation d'accès comprend l'affichage d'une information de contrôle dans le panneau de contrôle électronique (41), et le contrôle du système de production (40) en fonction de la sélection d'une des informations affichées.

4. Procédé selon la revendication 1, l'activation d'accès comprenant l'activation d'exécution d'une ou de plusieurs applications de logiciels dans le cas où le radiodiffuseur est authentifié et/ou l'activation d'accès à de l'information enregistrée du système informatique dans le cas où le radiodiffuseur est identifié.

5. Procédé selon la revendication 3 ou la revendication 4, comprenant en outre la répétition de l'étape d'authentification et/ou d'identification et, dans le cas où le radiodiffuseur est en outre authentifié, la poursuite de l'activation de l'accès ; sinon, l'empêchement de l'accès au radiodiffuseur.

6. Procédé selon l'une quelconque des revendications précédentes, dans lequel chaque paquet de données parmi les paquets de données comprend un numéro de séquence indicateur d'un ordre de transmission du paquet de données dans une séquence des paquets de données formant l'élément de donnée, et un indice indicateur de l'élément de donnée, le procédé comprenant en outre l'utilisation du numéro de séquence et de l'indice pour combiner les paquets de données interceptés qui forment un seul élément de donnée parmi l'au moins un élément de donnée.

7. Procédé selon l'une quelconque des revendications précédentes, dans lequel chaque paquet de données parmi les paquets de données comprend une valeur de comptage indicatrice d'un temps de transmission ou d'un ordre de transmission du paquet de données respectif par le radiodiffuseur, le procédé comprenant en outre :
la détermination de l'utilisation de la valeur de comptage du paquet de données à un intervalle de temps entre la réception du paquet de données et un autre paquet de données reçu de l'élément de donnée ; si l'intervalle de temps est plus long qu'un seuil prédéfini, la génération d'un signal indiquant une attaque par rejeu présumée.

8. Procédé selon l'une quelconque des revendications précédentes, comprenant en outre la réception de paquets de données d'un élément de donnée d'authentification, l'élément de donnée d'authentification comprenant une valeur de niveau d'authentification comportementale, la valeur de niveau d'authentification comportementale indiquant un niveau d'authentification d'un utilisateur du radiodiffuseur, où l'activation du radiodiffuseur pour accéder au service est effectuée uniquement lorsque la valeur de niveau d'authentification comportementale remplit une condition d'authentification comportementale prédéfinie.

9. Bibliothèque comprenant des instructions lisibles par machine pré-écrites qui, lorsqu'elles sont chargées et exécutées par un ordinateur, exécutent le procédé déclamé par l'une quelconque des revendications précédentes 1 à 8.

10. Système d'accès (24, 41) étant conçu pour intercepter des paquets de données d'au moins un élément de donnée d'un radiodiffuseur (25, 45, 100) sur un canal sans connexion dans une bande de fréquences radio de courte portée ; utiliser l'élément de donnée pour authentifier et identifier le radiodiffuseur et, dans le cas où le radiodiffuseur est authentifié et identifié, permettre au radiodiffuseur d'accéder à un service activé par le système de contrôle, où un élément de donnée parmi l'au moins un élément de donnée est une clé de session, où les paquets de données d"un ou de plusieurs autres éléments de donnée parmi l'au moins un élément de donnée est ou sont chiffrés par la clé de session, le système étant en outre conçu pour la division de la clé de session en un nombre prédéfini de parties de clé ; sélectionner de manière répétée une partie de clé différente parmi les parties de clé, et utiliser la partie de clé sélectionnée pour déchiffrer le paquet de données chiffrées jusqu'à ce que le paquet de données chiffrées soit déchiffré.
